# EUROPEAN PATENT APPLICATION

(11) **EP 2 390 520 A2**
(43) Date of publication of application: **30.11.2011**
(21) Application number: 11166891.9
(22) Date of filing: 20.05.2011
(51) Int. Cl.: F16C 19/40, F16C 33/66, F16C 33/37

(54) **Roller bearing**

(30) Priority: 27.05.2010 JP 2010121468
(71) Applicant: JTEKT CORPORATION, Osaka-shi Osaka 542-8502 (JP)
(72) Inventor: Kobayashi, Yasuhiro, Osaka-shi, Osaka 542-8502 (JP)
(74) Representative: TBK

(57) **Abstract**

Each separator (7) is arranged between an outer peripheral cylindrical raceway surface of an inner ring and an inner peripheral cylindrical raceway surface of an outer ring, and interposed between two cylindrical rollers positioned next to each other in the circumferential direction of a cylindrical roller bearing. The separator (7) has: a first concave surface (31) which is one end surface of the separator (7) in the circumferential direction and on which the cylindrical roller slides; one end surface (30) in a radial direction of the inner ring; a lubricant storing chamber (27) that opens at the one end surface (30) in the radial direction; and at least one slit (28, 29) that opens at the concave surface (31) and that is communicated with the lubricant storing chamber (27).

## Description

### INCORPORATION BY REFERENCE

The disclosure of Japanese Patent Application No. 2010-121468 filed on May 27,2010 including the specification, drawings and abstract is incorporated herein by reference in its entirety.

### BACKGROUND OF THE INVENTION

### 1. Field of the Invention

The invention relates to a roller bearing, for example, a cylindrical roller bearing, a tapered roller bearing or a convex roller bearing (spherical roller bearing). The invention relates to a roller bearing that is suitably used for rotatably supporting, for example, a rotating shaft in a gearbox for wind-power generation.

### 2. Description of Related Art

Japanese Patent Application Publication No. 2007-64434 (JP 2007-64434 A) describes a tapered roller bearing that is an example of a conventional roller bearing.

The tapered roller bearing includes an outer ring, an inner ring, a plurality of tapered rollers and a plurality of separators. The tapered rollers and the separators are arranged between the outer ring and the inner ring. The inner ring has a rib that is positioned next to a tapered raceway surface of the inner ring and at a large diameter-side end of the inner ring. The rib has a roller guide surface, and the roller guide surface guides a large diameter-side end surface of the tapered roller. A lubricant is supplied between the inner ring and the outer ring.

Each separator is arranged between the two tapered rollers that are next to each other in the circumferential direction of the tapered roller bearing. Each separator has a concave surface on which the tapered roller slides, and a groove. The groove extends in the axial direction, the radial direction or the circumferential direction of the tapered roller bearing.

In the conventional tapered roller bearing described above, the separators are used instead of a cage. Thus, the above-described tapered roller bearing includes a larger number of tapered rollers, and therefore has a higher bearing load-carrying capacity. The lubricant stored in the groove is supplied to sliding portions such as a rolling contact surface of the tapered roller. Thus, for example, when the tapered roller bearing rotates at high speed under no-load conditions, it is possible to suppress smearing and seizure that may occur if the tapered rollers slip.

However, even the conventional tapered roller bearing described above has a problem that the effect of suppressing smearing and seizure of the sliding portions is not sufficient.

### SUMMARY OF THE INVENTION

It is an object of the invention to provide a roller bearing which has an excellent bearing load-carrying capacity and in which seizure and smearing of a sliding portion are suppressed.

An aspect of the invention relates to a roller bearing, including: an inner raceway member that has an outer peripheral raceway surface; an outer raceway member that has an inner peripheral raceway surface; a plurality of rollers arranged between the outer peripheral raceway surface of the inner raceway member and the inner peripheral raceway surface of the outer raceway member; and a plurality of separators which are arranged between the outer peripheral raceway surface of the inner raceway member and the inner peripheral raceway surface of the outer raceway member and each of which is interposed between two of the rollers next to each other in a circumferential direction of the inner raceway member. The separator has: a concave surface which is one end surface of the separator in the circumferential direction and on which the roller slides; one end surface in a radial direction of the inner raceway member; a lubricant storing chamber that opens at the one end surface in the radial direction; and at least one slit that opens at the concave surface and that is communicated with the lubricant storing chamber.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic cross-sectional view of a cylindrical roller bearing along its axial direction, according to an embodiment of the invention;
FIG. 2 is a schematic cross-sectional view of a part of the cylindrical roller bearing along its radial direction;
FIG. 3 is a perspective view of a separator of the cylindrical roller bearing, illustrating the internal configuration of the separator;
FIG. 4 is a cross-sectional view taken along the line A-A in FIG. 3;
FIG. 5 is a cross-sectional view taken along the line B-B in FIG. 3; and
FIG 6 is a plain view of a first concave surface of a separator of a roller bearing according to a modified example.

### DETAILED DESCRIPTION OF EMBODIMENTS

Hereafter, an embodiment of the invention will be described in detail with reference to the accompanying drawings.

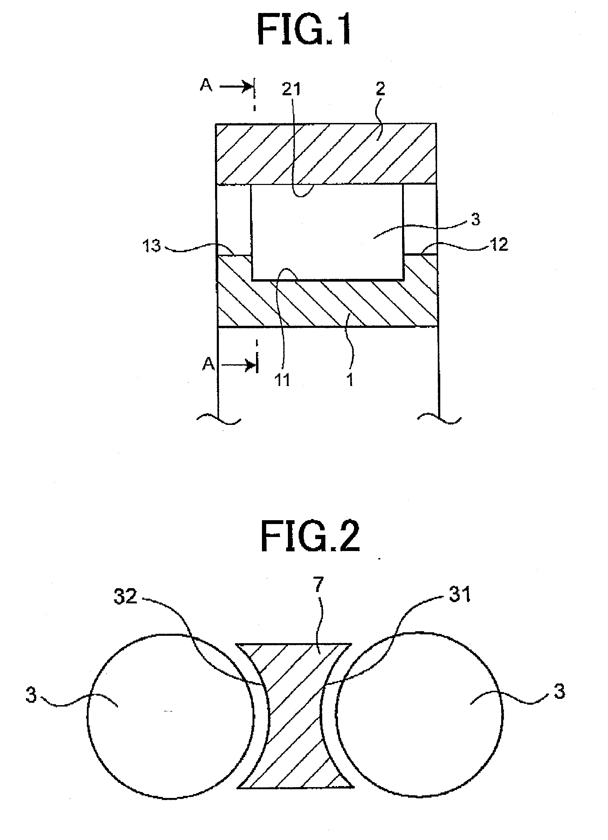

FIG 1 is a schematic cross-sectional view of a cylindrical roller bearing along its axial direction, according to an embodiment of the invention.

The cylindrical roller bearing includes an inner ring 1 that serves as an inner raceway member, an outer ring 2 that serves as an outer raceway member, a plurality of cylindrical rollers 3, and a plurality of separators 7 (separators) (not shown in FIG. 1).

The inner ring 1 is fitted to the outer periphery of an output shaft (not shown) in a gearbox for wind power generation so that the inner ring 1 is secured. The inner ring 1 has an outer peripheral cylindrical raceway surface 11 that serves as an outer peripheral raceway surface, a first rib 12, and a second rib 13. The first rib 12 is positioned at one side of the outer peripheral cylindrical raceway surface 11 in the axial direction. The second rib 13 is positioned at the other side of the outer peripheral cylindrical raceway surface 11 in the axial direction.

The outer ring 2 is fitted to the inner peripheral surface of a housing of the gearbox so that the outer ring 2 is secured. The outer ring 2 has an inner peripheral cylindrical raceway surface 21 that serves as an inner peripheral raceway surface. The number of the cylindrical rollers 3 is equal to the number of the separators 7. The cylindrical rollers 3 and the separators 7 are arranged alternately in the circumferential direction of the inner ring 1. The cylindrical rollers 3 are arranged between the outer peripheral cylindrical raceway surface 11 of the inner ring 1 and the inner peripheral cylindrical raceway surface 21 of the outer ring 2. The cylindrical rollers 3 are separated from each other in the circumferential direction by the separators 7.

FIG. 2 is a cross-sectional view taken along the line A-A in FIG. 1 (cross-sectional view along the radial direction of the cylindrical roller bearing). In FIG. 2, the inner ring 1 and the outer ring 2 are omitted.

As shown in FIG. 2, each separator 7 has a substantially hourglass-shaped cross section. Each separator 7 has a first concave surface 31 and a second concave surface 32. The first concave surface 31 is one end surface of the separator 7 in the circumferential direction (the circumferential direction of the cylindrical roller bearing, which coincides with the circumferential direction of the inner ring 1). The second concave surface 32 is the other end surface of the separator 7 in the circumferential direction. The first concave surface 31 and the second concave surface 32 are used as sliding surfaces on which the cylindrical rollers 3 slide.

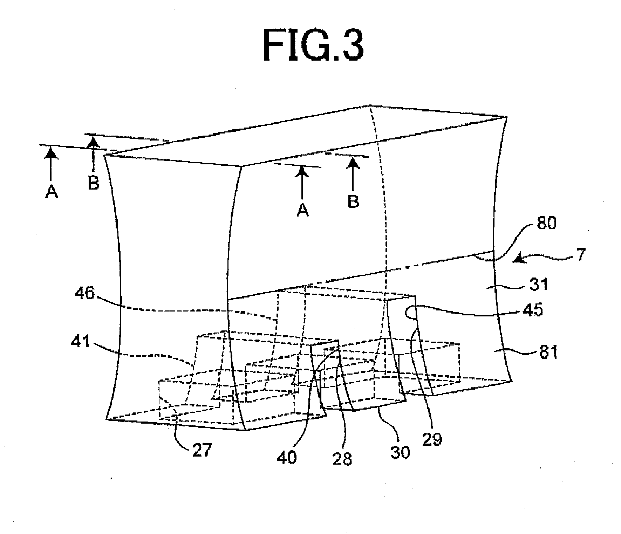

FIG. 3 is a perspective view of the separator 7 of the cylindrical roller bearing, illustrating the internal configuration of the separator 7.

As shown in FIG. 3, the separator 7 has a lubricant storing chamber 27, a first slit 28, and a second slit 29. When each separator 7 is fitted to the cylindrical roller bearing, the lubricant storing chamber 27 opens at an end surface 30 that is an inner end surface of the separator 7 in the radial direction of the inner ring 1.

The lubricant storing chamber 27 defines a substantially rectangular prism-shaped space. The lubricant storing chamber 27 is present only in a region 81 that is on one side with respect to a position 80 in the radial direction of the cylindrical roller bearing. The cylindrical roller 3 contacts the first concave surface 31 at the position 80. Further, the first concave surface 31 is deepest at the position 80 in its depth direction. Note that the two-dot chain line indicating the position 80 is illustrated for convenience sake, and no visible line is formed in a product.

The first slit 28 opens at the first concave surface 31, the second concave surface 32 and the end surface 30 that is the inner end surface of the separator 7 in the radial direction. Each of a first opening 40 of the first slit 28, which is at the first concave surface 31, and a second opening 41 of the first slit 28, which is at the second concave surface 32, has a substantially rectangular planar shape. Each of the first opening 40 and the second opening 41 of the first slit 28 extends to the end surface 30 that is the inner end surface of the separator 7 in the radial direction. The longitudinal directions of the first opening 40 and the second opening 41 of the first slit 28 substantially coincide with each other in the radial direction. The first opening 40 and the second opening 41 are in substantially the same shape, and at substantially the same position in the longitudinal direction of the separator 7. The region that overlaps the first opening 40 in the width direction of the separator 7 is a first hollow space. The first slit 28 defines a second hollow space that is formed by excluding, from the first hollow space, a portion at which the first hollow space and a third hollow space defined by the lubricant storing chamber 27 overlap each other. The first slit 28 is present only in the region 81 that is on one side with respect to the position 80 in the radial direction of the cylindrical roller bearing. The cylindrical roller 3 contacts the first concave surface 31 at the position 80. Further, the first concave surface 31 is deepest at the position 80 in its depth direction.

The second slit 29 is at a position that is apart from the first slit 28 in the longitudinal direction of the separator 7. The second slit 29 opens at the first concave surface 31, the second concave surface 32, and the end surface 30 that is the inner end surface of the separator 7 in the radial direction. Each of a first opening 45 of the second slit 29, which is at the first concave surface 31, and a second opening 46 of the second slit 29, which is at the second concave surface 32, has a substantially rectangular planar shape. Each of the first opening 45 and the second opening 46 of the second slit 29 extends to the end surface 30 that is the inner end surface of the separator 7 in the radial direction. The longitudinal directions of the first opening 45 and the second opening 46 of the second slit 29 substantially coincide with each other in the radial direction. The first opening 45 and the second opening 46 are in substantially the same shape, and at substantially the same position in the longitudinal direction of the separator 7. The region that overlaps the first opening 45 in the width direction of the separator 7 is a fourth hollow space. The second slit 29 defines a fifth hollow space that is formed by excluding, from the fourth hollow space, a portion at which the fourth hollow space and the third hollow space defined by the lubricant storing chamber 27 overlap each other. The second slit 29 is present only in the region 81 that is on one side with respect to the position 80 in the radial direction of the cylindrical roller bearing. The cylindrical roller 3 contacts the first concave surface 31 at the position 80. Further, the first concave surface 31 is deepest at the position 80 in its depth direction.

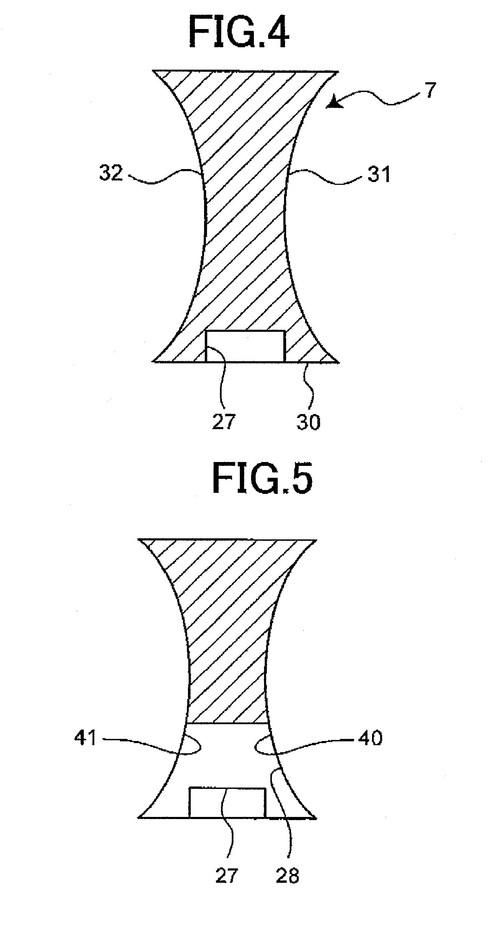

FIG. 4 is a cross-sectional view taken along the line A-A in FIG. 3. FIG. 4 includes the cross section of the separator 7, along its width direction, at one end portion in its longitudinal direction. FIG. 5 is a cross-sectional view taken along the line B-B in FIG 3. FIG 5 includes the cross section of the separator 7, along its width direction, at one end portion in its longitudinal direction- The line B-B is closer to the center of the separator 7 in its longitudinal direction than the line A-A.

As shown in FIGs. 4 and 5, the end of the lubricant storing chamber 27 on one side in the axial direction of the cylindrical roller bearing is closer to the end of the separator 7 on the one side in the axial direction than the end of the first slit 28 on the one side in the axial direction.

In the cylindrical roller bearing according to the embodiment, due to a centrifugal force of the inner ring 1, it is possible to smoothly deliver the lubricant that adheres to the outer peripheral cylindrical raceway surface 11 into the lubricant storing chamber 27 and to supply the lubricant from the lubricant storing chamber 27 to the rolling contact surfaces of the cylindrical rollers 3 through the slits 28 and 29. Accordingly, it is possible to suppress smearing and seizure of the sliding portions such as the rolling contact surfaces of the rollers.

In the cylindrical roller bearing according to the embodiment, each of the slits 28 and 29 is present only in the region 81 that is on one side with respect to the position 80 in the radial direction of the cylindrical roller bearing. The cylindrical roller 3 contacts the first concave surface 31 at the position 80. Further, the first concave surface 31 is deepest at the position 80 in its depth direction. Therefore, the lubricant discharged from the openings of the slits 28 and 29 is dammed up by the rolling contact surfaces of the cylindrical rollers 3, and is therefore less likely to flow to the region that is on the opposite side of the position 80 from the region 81 in the radial direction. Accordingly, it is possible to suppress splashes of the lubricant, thereby improving the lubricating property.

In the cylindrical roller bearing according to the embodiment, the two slits 28 and 29 differ in length in the radial direction of the cylindrical roller bearing. Accordingly, it is possible to reduce the variation in the lubricating property due to the operating conditions. Further, because the two slits 28 and 29 differ in length in the radial direction, the frequency that the cylindrical roller 3 contacts the edges of the slits 28 and 29 is reduced. This, it is possible to enable the cylindrical roller 3 to keep rolling smoothly, and prevent damage of the separator 7.

In the cylindrical roller bearing according to the embodiment, each of the slits 28 and 29 opens at both the first concave surface 31 and the second concave surface 32. Therefore, it is possible to appropriately lubricate the rolling contact surfaces of the cylindrical rollers 3 that are arranged on opposite sides of the separator 7 in the circumferential direction of the cylindrical roller bearing.

In the cylindrical roller bearing according to the embodiment, each of the slits 28 and 29 opens at one end surface of the separator 7 in the radial direction of the cylindrical roller bearing. Therefore, the slits 28 and 29 are easily formed. Further, it is possible to supply part of the lubricant to the rolling contact surfaces of the cylindrical rollers 3 through only the slits 28 and 29.

In the cylindrical roller bearing according to the embodiment, the lubricant housing chamber 27 opens at the inner end surface of the separator 7, that is, one end surface of the separator 7 in the radial direction, and the inner ring 1 that serves as the inner raceway member is a rotating member. Therefore, due to a centrifugal force of the inner ring 1, it is possible to automatically and smoothly supply the lubricant into the lubricant storing chamber 27.

In the cylindrical roller bearing according to the embodiment, the lubricant housing chamber 27 defines the rectangular prism-shaped space. However, in the invention, the shape of the space defined by the lubricant storing chamber is not particularly limited. The lubricant storing chamber may have any shapes as long as it opens at one end surface of the separator in the radial direction of the cylindrical roller bearing.

In the cylindrical roller bearing according to the embodiment, the separator 7 has the two slits 28 and 29 that are apart from each other in the longitudinal direction of the separator 7 (the axial direction of the cylindrical roller bearing), that open at the both end surfaces of the separator 7 in the circumferential direction of the cylindrical roller bearing, and that are communicated with the lubricant storing chamber 27. Alternatively, in the invention, the separator may have one slit that opens at the both end surfaces of the separator in the circumferential direction and that is communicated with the lubricant storing chamber, or may have three or more slits that are apart from each other in the longitudinal direction, that open at the both end surfaces of the separator in the circumferential direction, and that are communicated with the lubricant storing chamber.

In the invention, when the separator has multiple slits that are apart from each other in the longitudinal direction of the separator, that open at the both end surfaces of the separator in the circumferential direction and that are communicated with the lubricant storing chamber, all the slits may have the same width, or at least two of the slits may differ in width in the longitudinal direction of the separator.

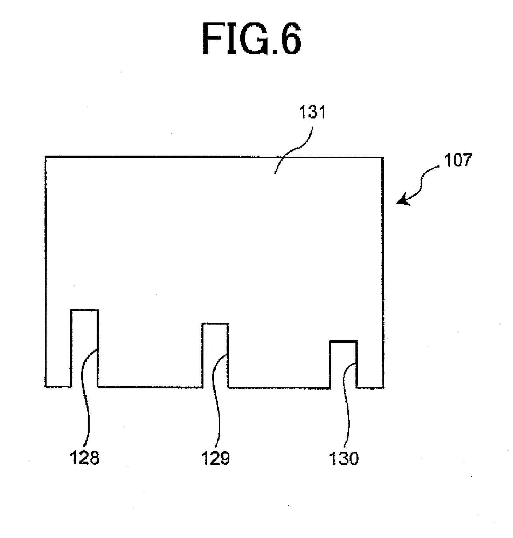

In the invention, when the separator has multiple slits that are apart from each other in the longitudinal direction of the separator, that open at the both end surfaces of the separator in the circumferential direction and that are communicated with the lubricant storing chamber, all the slits may have the same length in the radial direction of the cylindrical roller bearing, or at least two of the slits may differ in length in the radial direction. For example, in the invention, as shown in FIG. 6, that is, as shown in a plain view of a first concave surface 131 of a separator 107 of a cylindrical roller bearing according to a modified example, the separator 107 may have three slits 128, 129 and 130 that open at the first concave surface 131 and that all differ in length, in the radial direction.

In the cylindrical roller bearing according to the embodiment, the slits 28 and 29 formed in the separator 7 open at the both end surfaces of the separator 7 in the circumferential direction of the cylindrical roller bearing. Alternatively, in the invention, the slits formed in the separator may open at only one end surface of the separator in the circumferential direction. In this case, if all the slits of each separator open at only one end surface thereof, which is at one side of the separator in the circumferential direction, and each separator moves with respect to the stationary member toward the other side in the circumferential direction, it is possible to effectively supply the lubricant from the slits to all the cylindrical rollers. The cylindrical roller bearing according to the invention may have both a separator that has slits that open at only an end surface that is at one side of the separator in the circumferential direction, and a separator that has slits that open at only an end surface that is at the other side of the separator in the circumferential direction.

In the cylindrical roller bearing according to the embodiment, the shape of the opening of each of the slits 28 and 29 is rectangular. However, in the invention, the opening of each slit may have any shapes such as a square and a circle.

In the cylindrical roller bearing according to the embodiment, each of the slits 28 and 29 opens at the end surface 30 of the separator 7, which is one end surface of the separator 7 in the radial direction. However, in the invention, each slit need not open at any end surfaces of the separator in the radial direction, as long as each slit is communicated with the lubricant storing chamber and opens at the concave surface of the separator, that is, one end surface of the separator in the circumferential direction.

In the cylindrical roller bearing according to the embodiment, the openings 40, 41, 45 and 46 of the slits are present only in the region 81 that is on one side with respect to the position 80 in the radial direction of the cylindrical roller bearing. The cylindrical roller 3 contacts the first concave surface 31 at the position 80. Further, the first concave surface 31 is deepest at the position 80 in its depth direction. However, in the invention, the opening of each slit may lie astride the regions on both sides with respect to the position, in the radial direction, at which the roller contacts the first concave surface and the first concave surface is deepest in its depth direction. In the invention, each slit may be present in only the region that is on one side with respect to the position, in the radial direction, at which the roller contacts the first concave surface and the first concave surface is deepest in its depth direction. Alternatively, each slit may lie astride the regions on both sides with respect to the position in the radial direction.

In the cylindrical roller bearing according to the embodiment, each of the slits 28 and 29 opens at the end surfaces of the separator in the circumferential direction and the end surface of the separator in the radial direction. However, in the invention, at least one slit may open at an end surface of the separator in the axial direction of the cylindrical roller bearing. In this case, it is possible to suppress seizure of the rib of the raceway member.

In the cylindrical roller bearing according to the embodiment, the lubricant storing chamber 27 of the separator 7 opens at the inner end surface of the separator in the radial direction of the cylindrical roller bearing. Alternatively, in the invention, the lubricant storing chamber of the separator may open at the outer end surface of the separator in the radial direction instead of the inner end surface of the separator in the radial direction.

In the invention, when the inner raceway member is a rotating member and the lubricant storing chamber opens at the inner end surface of the separator in the radial direction, if each slit is formed such that the outer side face of the slit in the radial direction is inclined outward in the radial direction toward the concave surface of the separator, that is, the end surface of the separator in the circumferential direction, the lubricant is more smoothly discharged from the opening of the slit by the pumping action due to a centrifugal force of the inner raceway member and the separator. Thus, it is possible to improve the lubricating property.

In the cylindrical roller bearing according to the embodiment, each of the raceway members 1 and 2 is an annular member. Alternatively, in the invention, the raceway members may include a shaft member, and the raceway surface may be formed in the outer peripheral surface of the shaft member. Further alternatively, the inner peripheral raceway surface may be formed in the inner peripheral surface of the housing. In this case, the housing is used as an outer raceway member.

In the roller bearing according to the invention, the inner raceway member that is positioned further inward than the outer raceway surface in the radial direction may be either a rotational raceway member or a stationary raceway member.

In each of the embodiment and the modified examples of the embodiment, the roller is a cylindrical roller. Alternatively, in the invention, a roller other than a cylindrical roller, for example, a tapered roller or a convex roller may be used.

In the embodiment, the roller bearing according to the invention is arranged between the rotating shaft of the gearbox for wind power generation and the housing. However, it is needless to say that the roller bearing according to the invention may be used to support a rotating shaft or a rotating housing other than those of a gearbox for wind power generation, rotatably with respect to a stationary member.

In the invention, any types of lubricant may be used. For example, grease may be used as a lubricant. Alternatively, cleaning liquid or lubricating oil may be used as a lubricant.
Each separator (7) is arranged between an outer peripheral cylindrical raceway surface of an inner ring and an inner peripheral cylindrical raceway surface of an outer ring, and interposed between two cylindrical rollers positioned next to each other in the circumferential direction of a cylindrical roller bearing. The separator (7) has: a first concave surface (31) which is one end surface of the separator (7) in the circumferential direction and on which the cylindrical roller slides; one end surface (30) in a radial direction of the inner ring; a lubricant storing chamber (27) that opens at the one end surface (30) in the radial direction; and at least one slit (28, 29) that opens at the concave surface (31) and that is communicated with the lubricant storing chamber (27).

## Claims

1. A roller bearing, comprising:
an inner raceway member that has an outer peripheral raceway surface;
an outer raceway member that has an inner peripheral raceway surface;
a plurality of rollers arranged between the outer peripheral raceway surface of the inner raceway member and the inner peripheral raceway surface of the outer raceway member; and
a plurality of separators which are arranged between the outer peripheral raceway surface of the inner raceway member and the inner peripheral raceway surface of the outer raceway member, and each of which is interposed between two of the rollers next to each other in a circumferential direction of the inner raceway member,
wherein the separator has
a concave surface which is one end surface of the separator in the circumferential direction and on which the roller slide,
one end surface in a radial direction of the inner raceway member,
a lubricant storing chamber that opens at the one end surface in the radial direction, and
at least one slit that opens at the concave surface and that is communicated with the lubricant storing chamber.

2. The roller bearing according to claim 1,
wherein the separator has a plurality of the slits,
wherein the slits are apart from each other in an axial direction of the inner raceway member,
wherein the slits are present only in a region that is on one side with respect to a position, in the radial direction, at which the roller contacts the concave surface and the concave surface is deepest in a depth direction of the concave surface, and
wherein at least two of the slits differ in length in the radial direction.
